# EUROPEAN PATENT APPLICATION

(11) **EP 4 628 888 A1**
(43) Date of publication of application: **08.10.2025**
(21) Application number: 24168694.8
(22) Date of filing: 05.04.2024
(51) Int. Cl.: G01N 30/46, G01N 30/62

(54) **A GAS CHROMATOGRAPH FOR DETECTION OF A COMPONENT OF A CHROMATOGRAPHIC SAMPLE**

(71) Applicant: ABB SCHWEIZ AG, 5400 Baden (CH)
(72) Inventor: RIAUD, Antoine, 5415 Nussbaumen (CH); MARET, Yannick, 5405 Dättwi (CH); HENCKEN, Kai, 79539 Lörrach (DE); DASGUPTA, Subhashish, 560066 Bangalore (IN)
(74) Representative: Maiwald GmbH

(57) **Abstract**

A gas chromatograph (300, 307) for detecting a component of an analytical mixture is proposed, including:
a first chromatographic-detection column (350);
a peak-modulator (120), which is coupled upstream to the first chromatographic-detection column (350) and configured to be provided with the analytical mixture; and
a first chromatograph-detector (360), which is coupled downstream to the first chromatographic-detection column (350), for detection of the component of the analytical mixture.

## Description

### Background

Thermal conductivity detectors are widely used in gas chromatography. However, they are highly susceptible to low frequency baseline fluctuations, which may be described by pink noise. This problem has been addressed by special devices, called modulators. These devices are complicated and not routinely integrated into gas chromatographs.

### Detailed description of the invention

Gas chromatographs analyse mixtures of gases by separating them. The separated components can pass through a detector to generate a series of signal peaks generated by means of the detector. The most common and/or lowest cost type of chromatographic detector is a thermal conductivity detector. A drawback of this type of chromatographic detector is that it is suffering a relatively large pink noise, which can stem from various sources, such as temperature variation or intrinsic noise of the thermal bead. Pink noise is a type of noise with increasing noise amplitude at lower frequencies. When using such detectors, wide peaks as for instance peaks lasting 10 seconds to 1 h (wide peaks) are noisier and/or are more susceptible to baseline drift than short peaks.

An identification of a baseline drift can be conducted by means of a modulator, wherein the modulator can be configured to control the inflow of an analyte to a chromatographic detector. Regardless of the chosen technology the modulator is based on, the modulator can be a complex device that must be attached and/or integrated to a gas chromatograph, which can increase development time and product cost of the gas chromatograph and/or can complicate procurement and/or can decrease reliability and/or can potentially increase downtime of the gas chromatograph.

Accordingly, the present invention is directed to a gas chromatograph for detecting a component of a chromatographic sample, and a method for detecting a component of a chromatographic sample by means of a gas chromatograph, as described in the independent claims.

Advantageous modifications of the invention are stated in the dependent claims. All combinations of at least two of the features disclosed in the description, the claims or the figures fall within the scope of the invention. In order to avoid repetition, features disclosed in accordance with the method shall also apply and be claimable in accordance with mentioned systems.

In this entire description of the invention, the sequence of procedural steps is presented in such a way that the process is easily comprehensible. However, the skilled person will recognize that many of the process steps can also be executed in a different order and lead to the same or a corresponding result. In this sense, the sequence of the process steps can be changed accordingly. Some features are provided with counting words to improve readability or to make the assignment more clear, but this does not imply the presence of certain features.

To achieve these and other advantages and in accordance with the purpose of the invention, as embodied and broadly described herein, there is provided a gas chromatograph for detecting a component of an analytical mixture. The gas chromatograph can comprise a first chromatographic-detection column, a peak-modulator, and a first chromatograph-detector.

The peak-modulator can be coupled upstream to the first chromatographic-detection column and can be configured to be provided with the analytical mixture. The first chromatograph-detector can be coupled downstream to the first chromatographic-detection column, for detection of the component of the analytical mixture.

Gas chromatography can be a method of separating components in a mixture by injecting a sample of gas, a vaporized solid, a vaporized liquid or a vaporized gel into a carrier gas, to form an analytical mixture, and passing this analytical mixture through a stationary phase of a chromatographic column. Regardless of its composition, the flowing mixture inside of the chromatographic column is called the mobile phase. The carrier gas can be an inert gas or an unreactive gas such as helium, argon, nitrogen or hydrogen. The mobile phase can be any mixture of gas flowing inside of the chromatographic column, regardless of its composition.

In chromatography, a chromatographic column can be a device used for separation of chemical substances and/or compounds. The column can comprise a stationary phase, allowing the mobile phase to pass through it. The chromatographic column can be configured to separate components of an analytical mixture in such a way that the components pass through the chromatographic column at different rates, depending on their chemical and physical properties and the resulting interactions with the column lining or filling, called the stationary phase. Stronger interacting components of the chromatographic sample travel more slowly through the column and have a longer residence time. Particularly, stronger interacting components can remain for a longer period of time than weaker interacting ones. The chromatographic column can be configured as a narrow tube.

The stationary phase in chromatography can be a phase over which the mobile phase or a solvent including an analyte moves past. It is typically a porous solid, e.g., glass, silica, or alumina, packed into a glass or metal tube or that constitutes an open-tube capillary's walls. The stationary phase can be fixed or unmoved while the mobile phase flows over it in a particular direction. In their travel through the chromatographic column, the different substances distribute themselves according to their relative affinity for the two phases. Because different mixture components have different attractions for the stationary phase, separation can occur. Components of the injected sample, which are more attracted to the stationary phase, remain in the chromatographic column longer, while those less attracted are flushed more rapidly from the column. A type of the stationary phase can affect an outcome of a chromatographic method, and a choice of the stationary phase can affect the separation efficiency. Different types of stationary phases are used depending on the specific requirements of the separation.

A first and/or second chromatographic-detection column can be a chromatographic column coupled to the first and/or second chromatograph-detector to detect and quantify separated compounds as they elute from the first and/or second chromatographic column respectively.

A sample to be analyzed by means of the gas chromatograph can be a specimen to be analyzed. The sample can be a mixture of components that needs to be separated by a chromatographic method. The sample can comprise one or more components including an analyte being of interest and possibly other components, or substances, not of interest to the analysis. The sample can comprise a gas, or a vaporized solid, a vaporized liquid or a vaporized gel.

A component of the sample can be a chemical species making up a part of the sample.

The analyte can be a specific component, or substance, of interest to be separated by means of a chromatograph method. Using other words, interesting components that need to be analyzed can be called analyte.

An analytical mixture can comprise carrier gas and the sample, i.e. the analytical mixture can be a mixture of carrier gas and the sample. The analytical mixture, which is modulated or peak-modulated, can comprise a mobile phase within a chromatographic column including a series of alternating plugs or chunks of carrier gas and analytical mixture.

In the field of gas chromatography, a carrier gas can be intended to transport a sample including an analyte to be analyzed by means of gas chromatography, i.e. a component or substance of interest to be analyzed, through a column. The carrier gas can be an inert or unreactive gas such as helium, argon, nitrogen, or hydrogen. The carrier gas can be capable for moving the sample through the column, where the separation of components or substances occurs. The choice of a type of the carrier gas can affect the efficiency of the separation and sensitivity of the detection. It is important to note that the carrier gas does not interact with the analyte.

The peak-modulator can comprise a valve for providing a modulation functionality and/or can be based on valve-free modulation device, to provide the functionality for controlling an inflow of the analyte to a chromatographic detector.

The peak-modulator or modulator will be described in more detail below and can be configured corresponding to a 3/2 valve. The peak-modulator can be operated particularly at a frequency in a range from 0.01 Hz to 100 Hz. A modulation signal for driving the peak-modulator can comprise a plurality of patterns, particularly, a square wave pattern, or a pulse wave pattern with a variable duty ratio, or even a more complex modulation pattern, comprising patterns including a plurality of frequencies and/or comprising patterns including modulated pulse width.

The peak-modulator can be provided with the analytical mixture and/or a portion of the analytical mixture at a first port of the peak-modulator and a carrier gas at a second port of the peak-modulator for generating a chopped analytical mixture train, including a plurality of gas plugs or chunks each comprising the analytical mixture or the carrier gas alternatively, which is provided at an exit of the peak-modulator via a third port of the peak-modulator. This analytical mixture train can be fed as mobile phase to the first and/or second chromatographic-detection column.

By providing a mobile phase including a plurality of alternating analytical mixture or carrier gas plugs to the first and/or second chromatographic-detection column, a first and/or second chromatograph-detector can be used to detect a component of the analytical mixture, when a portion of the analytical mixture is passing the first and/or second chromatograph-detector respectively. Additionally or alternatively, the first and/or second chromatograph-detector can be used to detect a baseline, which can be related to the first and/or second chromatograph-detector, when a portion of the carrier gas is passing the first and/or second chromatograph-detector respectively. The detection of the component of the analytical mixture and/or the baseline can improve the detection of the component of the analytical mixture, because the baseline related to the first and/or second chromatograph-detector can shift over time. This can be particularly important if the component of the analytical mixture is spread wide through the gas chromatograph and/or first and/or second chromatograph-columns of the gas chromatograph.

A valve-free peak-modulator can comprise a cryogenic modulator, including a delay loop, which can be configured to retain the analyte when a temperature of the delay loop is reduced and to release the analyte if the temperature of the delay loop is increased. Alternatively or additionally, the valve-free peak-modulator can be based on other techniques to modify the chemical potential of the analyte in the delay loop reversibly, such as electrochemical or photochemical modulation techniques.

Valve-based peak-modulators can modify a flow of the analyte by mechanically adjusting a flow of the analytical mixture to the first and/or second chromatographic column.

A chromatograph-detector can be a device that detects and quantifies separated compounds as they elute from the chromatographic column. These detectors can be integral to various chromatographic techniques, such as gas chromatography, or liquid chromatography. The main function of a chromatography detector is to translate the physical or chemical properties of the analyte molecules into a measurable signal, typically an electrical signal that can be displayed as a function of time in a graphical presentation, called a chromatogram. That means, the chromatograph-detector can be based on different physical and/or chemical principles for detection of a component of the chromatographic sample. The chromatograph-detector can be configured to generate a detector signal, which is dependent on a component of the analytical mixture passing the chromatograph-detector. Particularly, the chromatograph-detector can be a thermal conductivity detector, wherein for instance the detector signal can depend on the thermal conductivity of the component of the chromatographic sample passing the chromatograph-detector.

The coupling of the chromatographic-detection column with the chromatograph-detector can be a direct coupling and/or particularly a fluid coupling, which functionally couples these two devices, particularly in respect to a flow of a fluid. A direction of a flow of the mobile phase, particularly including the components of the analytical mixture within the gas chromatograph and/or a gas chromatograph system, can be a base for defining a direction of an upstream and/or a downstream flow. This means, that the mobile phase can first pass the first and/or second chromatographic-detection column before entering and/or passing the first and/or second chromatograph-detector respectively.

Advantageously, the gas chromatograph, particularly by means of the coupling between the peak-modulator and the chromatographic-detection column can be constructed and/or set up in a simple way with low complexity. Alternatively or additionally, this gas chromatograph is easy to maintain.

According to an aspect, the peak-modulator can be directly coupled to the first and/or second chromatographic-detection column upstream in respect to the mobile phase flow and/or a flow of the analytical mixture through the first and/or second chromatographic-detection column.

The term directly coupled can mean that there is no other functional device arranged between the peak-modulator and the first and/or second chromatographic-detection column.

According to an aspect, the peak-modulator or the peak-modulator-valve can be directly coupled to the first and/or second chromatographic-detection column, wherein the peak-modulator is arranged upstream from the first and/or second chromatographic-detection column in respect to the mobile phase flow and/or a flow of the analytical mixture through the first and/or second chromatographic-detection column.

According to an aspect, the chromatograph-detector can be coupled to the first and/or second chromatographic-detection column downstream, in respect to the mobile phase flow and/or the flow of the analytical mixture, for detection of the component of the gas-chromatographic sample, after passing the first and/or second chromatographic-detection column. Therefore, the first and/or second chromatograph-detector can be configured to detect the chopped analytical mixture train for detecting and/or identification of the baseline related to the first and/or second chromatographic-detector in addition to the component of the analytical mixture. Particularly, the chromatograph-detector can be coupled downstream from the first and/or second chromatographic-detection column, in respect to the mobile phase flow and/or the flow of the analytical mixture.

According to an aspect, the peak modulator can be configured to provide the analytical mixture or a carrier gas alternately, particularly essentially completely alternately, to the first and/or second chromatographic-detection column. By this, the peak-modulator can be configured to generate and/or supply the chopped analytical mixture train as a mobile phase for the first and/or second chromatographic-detection column.

According to an aspect, the peak-modulator can be configured, particularly corresponding to a functionality of, a 3/2 valve, to be provided or to be fed with the analytical mixture and the carrier gas, particularly by means of the first and the second port of the peak-modulator respectively, to provide the analytical mixture or a carrier gas alternately to the first and/or second chromatographic-detection column by means of a third port of the peak-modulator.

According to an aspect, the gas chromatograph includes a heart cut valve, which can be coupled directly to the peak-modulator upstream in respect to the mobile phase flow and/or to the flow of the analytical mixture, particularly through the first or second chromatographic-detection column, for selecting a specific part of the analytical mixture upstream in respect to the peak-modulator.

According to an aspect, the gas chromatograph includes a heart cut valve, which can be coupled directly to the peak-modulator, wherein the heart cut valve is arranged upstream from the peak-modulator in respect to the mobile phase flow and/or to the flow of the analytical mixture, particularly through the first or second chromatographic-detection column, for selecting a specific part of the analytical mixture upstream in respect to the peak-modulator.

The heart cut valve can comprise a single input port and two output ports, wherein one of the output ports is coupled to the peak-modulator. Alternatively or additionally, the heart cut valve can be configured as, particularly corresponding to a functionality of, the 3/2 valve, with three ports and two switch positions.

The heart cut valve can be coupled, particularly fluidly, directly to the peak-modulator in such a way that there is no functional device coupled between the peak-modulator and the heart cut valve.

Particularly, the heart cut valve and the peak-modulator can be operated synchronously is such a way that a combined valve comprising the heart cut valve and the peak-modulator, or a peak-modulator-valve, are operated by two switch-positions of the combined valve. Alternatively or additionally, the combined valve can be configured to build a 4/2 valve, comprising 4 ports and 2 positions, wherein a position of the valve can particularly mean a switch position of the valve for fluidly connecting input ports to output ports of the valve.

Alternatively or additionally, the heart cut valve can be coupled directly to a peak-modulator-valve, comprising at least a first and a second valve, by a common valve and/or a common used valve, which is as well part of the peak-modulator-valve and the heart cut valve. If the coupling of the peak-modulator-valve and the heart cut valve is configured by means of the common valve, a switch command of the heart cut valve and the peak-modulator-valve can be identical. The two valves of the peak-modulator-valve and the two valves of the heart cut valve can be actuated by a first actuator and a second actuator.

The heart cut valve and the peak-modulator-valve can be configured to form a single 4/2 valve, particularly by sharing the common valve as described above. This single 4/2 valve with the share common valve can be controlled to provide the functionality of the heart cut valve to isolate a portion of interest of the analytical mixture and the functionality of the peak-modulator-valve to modulate this portion by introducing a portions of the analytical mixture or carrier gas alternatively to enable to remove and/or identify a baseline noise, particularly by identifying of the baseline of the chromatograph-detector. Each modulated peak signal of the first and/or second chromatograph-detector can be processed individually and can therefore be less sensitive to pink noise.

The heart cut valve can improve the chromatographic methodology if the analytical mixture is itself an effluent of a chromatographic-separation column arranged upstream to the heart cut valve, and some components of the analytical mixture have already been separated into several, possibly overlapping, segments of different components by means of the chromatographic-separation column. This allows the chromatographic-detection column to process only a fraction or a part of the effluent of the chromatographic-separation column and remove interfering compounds that can have overlapped in the absence of the heart cut valve.

The gas chromatograph, which is equipped with a heart-cut valve, enables extracting a fraction of the effluent of a chromatographic-separation column, to reinject it in a chromatographic-detection column. This eliminates interfering peaks and simplifies the chromatographic analysis.

A valve of the heart cut valve, which is not directly coupled to the peak-modulator-valve, can be coupled to a port of the heart cut valve that is configured to be connected to a vent.

The heart cut valve can be configured to feed a selected portion of the analytical mixture to the peak-modulator. The peak-modulator can be configured to chop the portion of the analytical mixture as provided by the heart cut valve in a series of smaller parts of the portion of the analytical mixture and to add carrier gas between the smaller parts of the section of the chromatographic sample, particularly to form the chopped analytical mixture train.

The heart cut valve can be configured, particularly if coupled to the peak-modulator-valve by the common valve, to generate a chopped portion of the analytical mixture into a series of smaller parts and to release the series at a port, which is not directly coupled to the peak-modulator-valve, to a vent.

The heart-cut valve can be driven at high switching speed and particularly chopping the portion of the analytical mixture towards the peak-modulator-valve.

By coupling the heart cut valve and the peak-modulator-valve, by means of the common valve combining the two devices, overall cost of the gas chromatograph can be reduced and a maintenance of the gas chromatograph can be simplified.

According to an aspect, the heart cut valve and the peak-modulator-valve can be configured and coupled to constitute a 4/2 valve.

An m/n valve can be a valve having m ports and n switch positions.

The peak-modulator will be described in more detail below and can be configured according to a 3/2 valve, wherein the 3/2 valve can be defined as a pneumatic device comprising three ports and two switch positions. The peak-modulator can be configured to have a functionality according to a 3/2 valve for chopping a wide peak or portion of a component of the analytical mixture in a series of smaller ones. The peak-modulator can be operated at a frequency in a range from 0.01 Hz to 100 Hz.

Particularly, if the peak-modulator is configured as a peak-modulator-valve, valves of the 4/2 valve can be pneumatic controlled valves.

The pneumatic controlled valves can be arranged at a modular valve assembly, which is described in more detail below.

The modular valve assembly can comprise a pilot plate, a diaphragm, a unitary distribution plate and a sensor printed circuit board.

The diaphragm can be positioned between the pilot plate and the unitary distribution plate and can be configured to open or close one or more pneumatic valves formed between the diaphragm and the unitary distribution plate as explained in further detail below.

Using other words, the heart cut valve and the peak-modulator valve, which are coupled by means of the common valve, are building a single device that can be used both as a heart cut valve and as a peak-modulator and can be arranged directly coupled to the chromatographic-detection column. By means of the peak modulation, which is performed by the peak-modulator valve, the baseline of the detector can be monitored and/or detected, and a drift of a baseline signal generated by the first and/or second chromatograph-detector can be eliminated. Meanwhile, the combined configuration of the heart cut valve, which is coupled directly to the peak-modulator-valve, can reduce design, production, sourcing and maintenance costs.

According to an aspect, the gas chromatograph comprises a second chromatographic-detection column and a second chromatograph-detector.

The second chromatographic-detection column is coupled downstream to the peak-modulator. The second chromatograph-detector is coupled downstream to the second chromatographic-detection column, for detection of the component of the analytical mixture.

According to an aspect, the gas chromatograph comprising the second chromatographic-detection column and the second chromatograph-detector includes a peak modulator, which is configured to provide a peak modulated analytical mixture, comprising the analytical mixture or the carrier gas alternatively, in alternate terms to the first chromatographic-detection column or the second chromatographic-detection column, preferably crosswise in respect to the analytical mixture, and particularly preferably correspondingly inversely crosswise with respect to the carrier gas.

According to an aspect, the peak-modulator of each of the gas chromatographs described above can comprise a peak-modulator-valve and/or a cryogenic peak-modulator, particularly configured for generating a series of alternately plugs of carrier gas and analytical mixture.

Alternatively or additionally, the peak-modulator of each of the gas chromatographs as described above is configured to generate a plurality of gas plugs each comprising the analytical mixture or the carrier gas alternatively.

Alternatively or additionally, the peak-modulator of each of the gas chromatograph as described above is configured to generate a peak modulated analytical mixture.

According to an aspect, the heart cut valve and the peak-modulator-valve of the gas chromatograph comprising the first chromatograph-detector column and the first chromatograph-detector, particularly in a first detection branch, and/or the second chromatographic-detection column and the second chromatograph-detector, particularly in a second detection branch, as described above, are configured and coupled to constitute a 5/3 valve.

According to an aspect, any one of the gas chromatographs as described above can comprise a modular valve assembly, which can include a plurality of pneumatic controlled valves. The peak modulator valve can be built by means of a first part of the plurality of pneumatic controlled valves.

According to an aspect, the heart cut valve of any one of the gas chromatographs as described above can be built by means of a second part of the plurality of pneumatic driven valves.

According to an aspect, at least one common pneumatic controlled valve can be included in the first part of the plurality of pneumatic driven valves and the common pneumatic controlled valve can be included in the second part of the plurality of pneumatic driven valves.

A method for detecting a component of a chromatographic sample by means of a gas chromatograph is proposed, the method can comprise the following steps. In one-step, the analytical mixture or a carrier gas can be supplied alternatively, particularly as mobile phase, to a first and/or second chromatographic-detection column, for building a chopped analytical mixture train. In a further step, a baseline signal and/or a component signal can be generated by means of a first and/or second chromatograph-detector, to which the chopped analytical mixture train is supplied, for detection of the component of the analytical mixture.

According to an aspect of the method, the baseline signal can be generated if a portion of the chopped analytical mixture train containing the carrier gas causes the detector signal. Alternatively or additionally, the component signal can be generated if a portion of the chopped analytical mixture train containing the analytical mixture causes the detector signal.

According to an aspect of the method, the chopped analytical mixture train can be supplied to the chromatographic-detection column by means of a peak-modulator or peak-modulator-valve directly coupled to the chromatographic-detection column.

According to an aspect, the method can comprise the following steps. In one-step, a specific portion of the analytical mixture can be selected upstream to the peak-modulator, or the peak-modulator-valve, particularly by means of a heart cut valve. In another step, the specific part of the analytical mixture can be supplied alternatively with the carrier gas to the first and/or second chromatographic-detection column.

According to an aspect of the method, the detection of the component of the analytical mixture can be performed by means of a gas chromatograph as described above.

A use of a peak-modulator or a peak-modulator-valve, which is coupled upstream to the first and/or second chromatographic-detection column, is proposed for detection of a component of an analytical mixture.

### Brief description of the drawings

The accompanying drawings, which are included to provide a further understanding of the invention and are incorporated in and constitute a part of this application, illustrate embodiments of the invention and together with the description serve to explain the principle of the invention. The drawings display:
- FIG. 1 a, b: a heart cut valve;
- FIG. 2 a, b: a peak-modulator-valve;
- FIG. 3a: a gas chromatograph system;
- FIG. 3b: a modified gas chromatograph system;
- FIG. 4 a, b: a 4/2 valve;

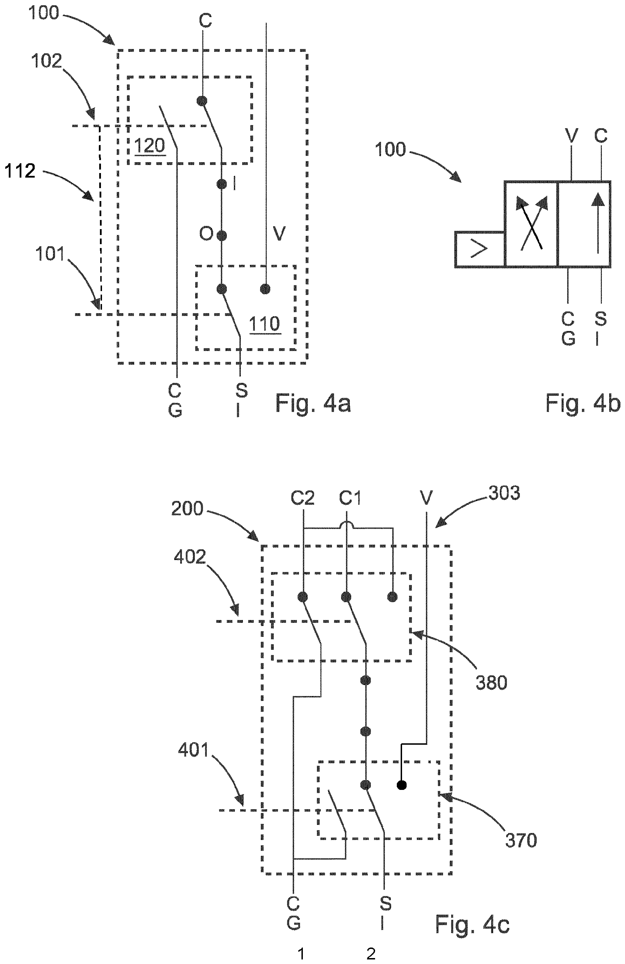

- FIG. 4 c: a 5/3 valve

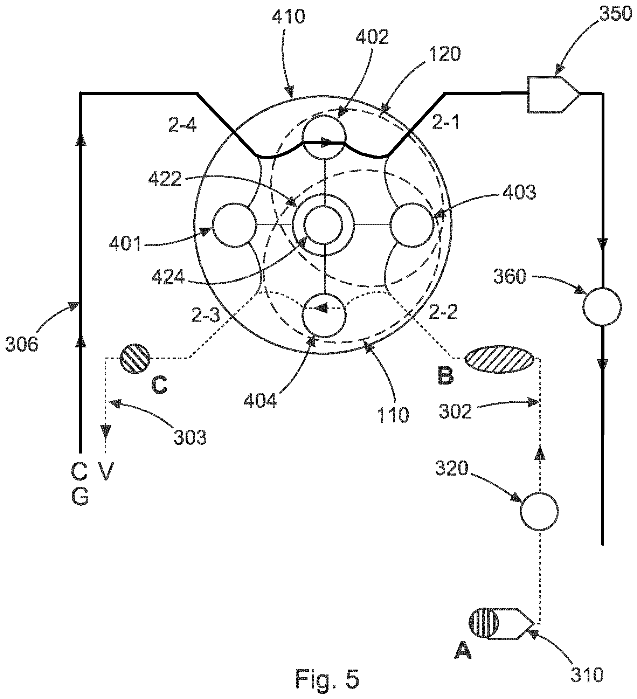

- FIG. 5: one-step of a flow diagram for detecting a component;

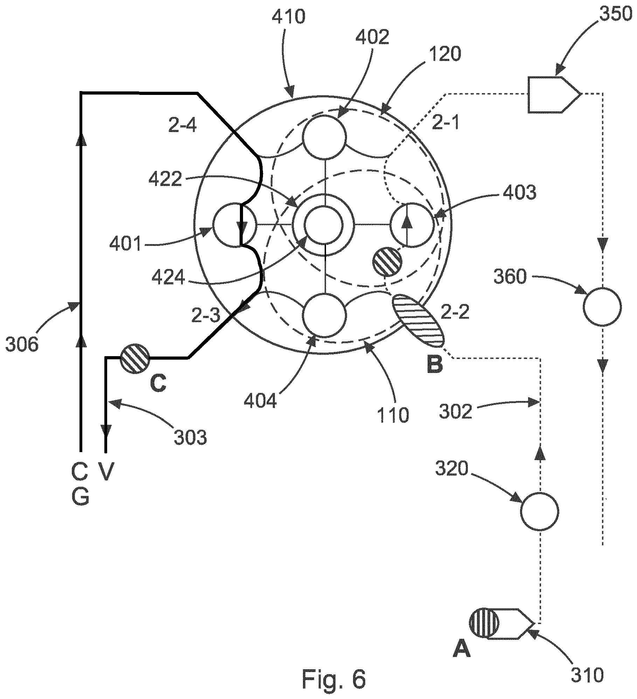

- FIG. 6: another step of a flow diagram for detecting a component;

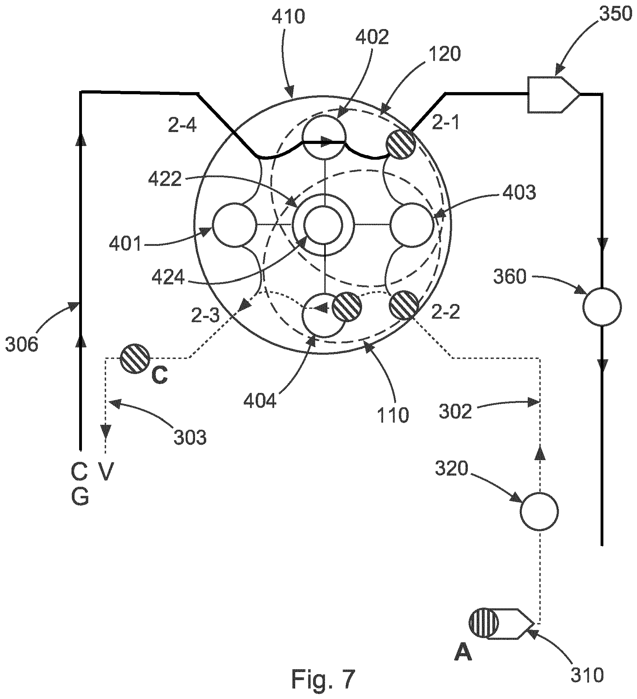

- FIG. 7: a further step of a flow diagram for detecting a component; and

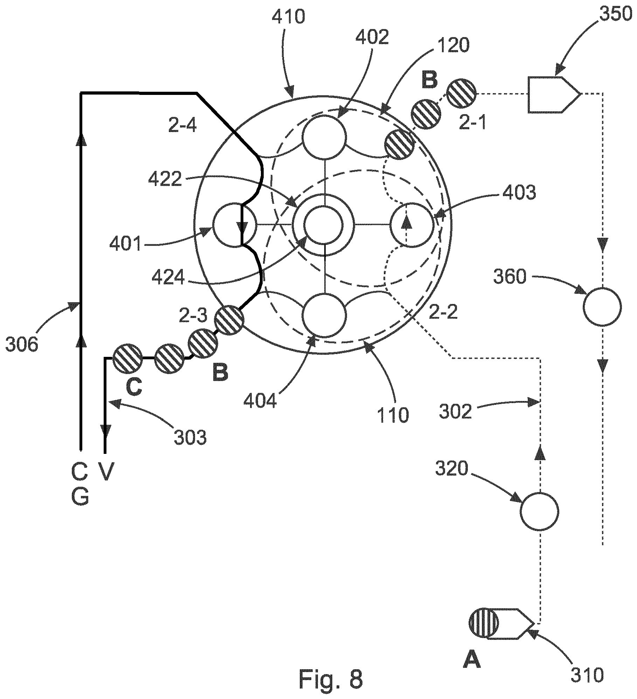

- FIG. 8: another step of a flow diagram for detecting a component.

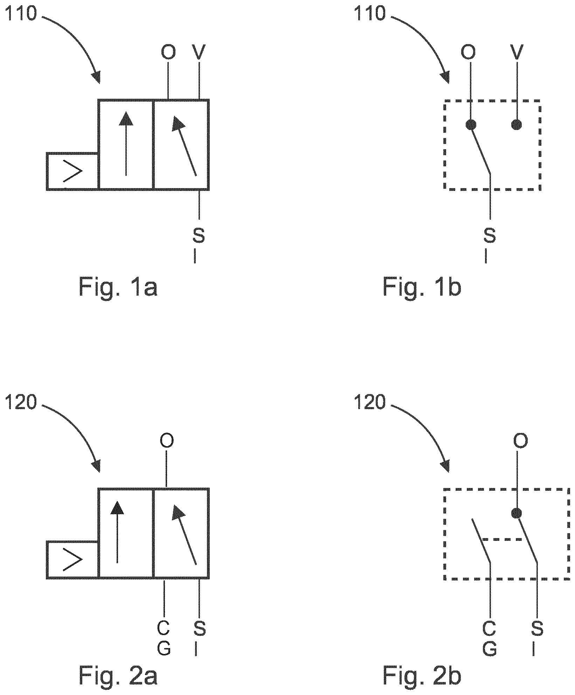

Figure 1a and 1b sketches schematically a heart cut valve by means of a first pneumatic circuit symbol using two different symbol schemes 1a or 1b for a first 3/2 valve, having 3 input/output ports and two positions, wherein a single input port S, as an analytical mixture input port, can be fluidly connected to two different output ports O, as an output port, or V, as the vent.

Preferably, the 3/2 valve can be pneumatically controlled, which combines the advantages of robustness, low cost and high speed.

Figure 2 a and 2b sketches schematically a peak-modulator 120 by means of a second pneumatic circuit symbol using two different symbol schemes 2a, 2b, for a second pneumatic controlled 3/2 valve, having 3 input/output ports and two switch positions, wherein a first input port CG, as a carrier gas input port, or a second input port SI, as the analytical mixture input port, can be fluidly connected alternately to a single output port O.

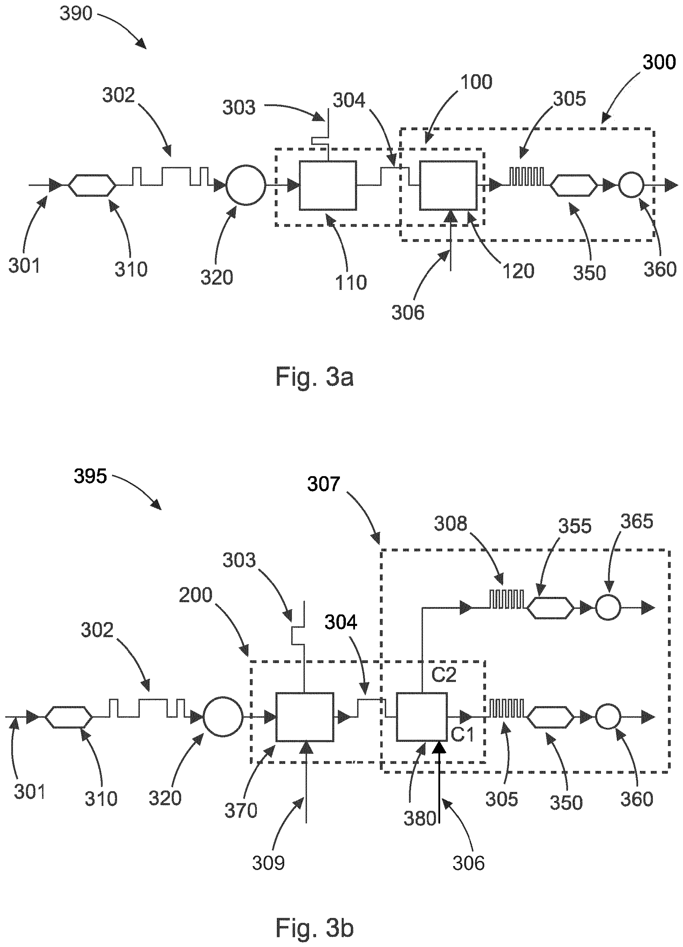

Figure 3a sketches schematically a gas chromatograph system 390 comprising a gas chromatograph 300 for detecting a component of an analytical mixture. The analytical mixture can be provided at an input 301 of a chromatographic separation column 310 for separating components of the analytical mixture as indicated by peaks of the symbol 302. The effluent of the chromatographic-separation column 310 is fed to an inter-column detector 320, which can be configured to control a heart cut valve 110, which is configured according to the first 3/2 valve as described above. The heart cut valve 110 is coupled directly to a peak-modulator-valve 120 upstream from the heart cut valve 110 in respect to a mobile phase flow as indicated by the arrows of figure 3, for selecting a specific portion of the analytical mixture. At pre-determined times, the heart cut valve 110 can be controlled to select a specific portion of the analytical mixture, indicated by the symbols 304, and discard another portion, which is indicated by the symbol 303. The sampling times of the heart cut valve can be determined during a conditioning of the gas chromatograph using the inter-column detector and a calibrated gas blend. The first chromatographic-detection column, which is coupled upstream to the first chromatographic detector, can form a first detection branch.

Because the heart cut valve 110 is directly coupled with the peak-modulator-valve 120, a specific portion, particularly a specific portion of interest, 304 of the analytical mixture can be fed to the peak-modulator 120. The peak-modulator 120 is coupled upstream to a chromatographic-detection column 350. The peak-modulator-valve 120 can be configured as 3/2 valve as described above and additionally provided by a carrier gas at the port 306. The peak-modulator-valve 120 is configured to provide the analytical mixture or a carrier gas alternately as mobile phase for the chromatographic-detection column 350. The symbol 305 indicates the alternating supply with the analytical mixture or the carrier gas for the chromatographic-detection column 350. The heart cut valve 110 and the peak-modulator-valve 120 can be configured and coupled to constitute a single unit 100, which can be described by a single 4/2 valve 100 as explained below.

A chromatograph-detector 360 is coupled downstream to the chromatographic-detection column 350, for detection of the component of the analytical mixture and/or the carrier gas alternately to determine a component signal, when the component is passing the chromatograph-detector 350 and/or a baseline signal, when the carrier gas is passing through the chromatograph-detector 350. The peak-modulator-valve 120, and the chromatographic-detection column 350, and the chromatograph-detector 360 can form the gas chromatograph 300.

Figure 3b sketches schematically a modified gas chromatograph system 395, which is based on the gas chromatograph system 390 as explained in respect to figure 3a additionally comprising a second chromatographic-detection column (355), wherein the second chromatographic-detection column (355) is coupled downstream to the peak-modulator (380). Additionally, the modified gas chromatograph system 395 comprises a second chromatograph-detector (365), which is coupled downstream to the second chromatographic-detection column (355), for detection of the component of the analytical mixture. The second chromatographic-detection column, which is coupled upstream to the second chromatographic detector, can form a second detection branch, which is functionally analogue to the first detection branch, as described above.

The peak modulator 380 of the modified gas chromatographic system 395 is configured to provide a peak modulated analytical mixture, comprising the analytical mixture or the carrier gas alternately, in alternate terms to the first chromatographic-detection column 350 or the second chromatographic-detection column 355, particularly crosswise in respect to the analytical mixture.

Using other words, the peak modulator 380 of the modified gas chromatographic system 395 is configured to provide a chopped analytical mixture train, including a plurality of gas plugs each comprising the analytical mixture or the carrier gas alternately. The chopped analytical mixture train is provided by means of the peak modulator 380 alternately to the first chromatographic-detection column or the second chromatographic-detection column, wherein the analytical mixture is provided to the first chromatographic-detection column if the second chromatographic-detection column is provided by the carrier gas and vice versa.

Advantageously, the peak-modulator-valve 380 of the modified gas chromatographic system 395 is configured to provide the analytical mixture to the first or the second chromatographic-detection column without discharging parts of the analytical mixture, when the carrier gas is provided to the first or second chromatographic-detection column.

The heart cut valve 370 of the modified gas chromatographic system 395 is configured by means of an additional input 309 to be provided by carrier gas to enable a flow of carrier gas within the first chromatographic-detection column 350 and the second chromatographic-detection column 355 if the heart cut valve 370 is controlled to discharge the analytical mixture or the sample to the vent port 303, to improve the performance of the first and/or the second chromatographic-detection column.

Figure 4a and 4b sketches schematically a 4/2 valve 100 comprising the peak-modulator-valve 120 and the heart cut valve 110 of the gas chromatograph 300 as described above, by means of a combination of the respective pneumatic circuit symbols with figure 4a and a third pneumatic symbol 4b. This 4/2 valve 100 has four input/output ports and can have two positions, as described by figure 4a or 4b. A first input port SI of the heart cut valve 110 can be provided to the input I of the peak-modulator-valve 122 or to a vent V as an output.

A second input port CG, as a carrier gas input port is provided to the peak-modulator-valve 120 for providing the analytical mixture SI or the carrier gas CG alternatively to an output port C. A control 101 of the heart cut valve 110 and a control 102 of the peak-modulator-valve 120 of figure 4a can be controlled to switch synchronised according to a 4/2 valve 100, as indicated by the dashed coupling line 112.

Alternatively or additionally, the control 101 of the heart cut valve 110 and the control 102 of the peak-modulator-valve 120 of figure 4a can be controlled independently according to a 4/3 valve, because the supply of the analytical mixture or the carrier gas alternatively by means of the peak-modulator-valve 120 can be configured and/or controlled to switch faster than the heart cut valve 110, when providing the analytical mixture to the peak-modulator-valve 120 or to the vent V. Figure 4b indicates this situation by the dashed line arrow for a path of the 4/3 valve.

Figure 4c sketches schematically a 5/3 valve 200 comprising the peak-modulator-valve 380 and the heart cut valve 370 of the modified gas chromatograph 307.

The 5/3 valve is featuring 5 ports and 3 switch positions. The 5 ports are an analytical mixture inlet port SI, a carrier gas inlet port CG, two outlet ports C1, C2, and a vent port V. The 3 switch positions are to direct the exhaust to a vent, or to a first output C1, or to a second output port C2. This would allow to direct the analytical mixture either to the vent, such that it can be discarded, or alternately to one of the output ports, resulting in a chopped analytical mixture train for each of the outlet ports C1, C2, for feeding them as a mobile phase for the first and the second chromatographic-detection column. The valve 370 of valve 200 in figure 4c is drawn in a position I and valve 380 of valve 200 is drawn in position I, too.

Using other words, the 5/3 valve 200 comprising the peak-modulator-valve 380 and the heart cut valve 370 of the modified gas chromatograph 307 comprises five input/output ports and three positions, wherein a single input port SI, as an analytical mixture input port, can be fluidly connected to three different output ports 01, O2 being output ports, or V, being a vent as a third output port. Each of the output ports can be connected to a series of chromatographic components, including but not limited to, the first and/or the second chromatographic-detection column, and the first and/or the second chromatographic detector.

The following table 1 summarises the functionality of the 5/3 valve 200.

A first inlet port of the 5/3 valve 200 can be provided with carrier gas CG and a second inlet port can be provided with the analytical mixture SI.

The 5/3 valve 200 can be configured in a discard position with valve 370 in position II and valve 380 in position I by means of lever 401 and lever 402 respectively. In this discard position of the 5/3 valve 200 the first inlet port is connected fluidly with a first outlet port C1 and with the second outlet port C2 to provide both outlet ports C1, C2 with carrier gas. Additionally, in the discard position the second inlet port is connected with a third outlet port vent V to provide the analytical mixture SI to the vent V.

In a chop1 position of the 5/3 valve 200, valve 370 is in position I and valve 380 is in position I, by means of lever 401 and lever 402 respectively, to connect the first inlet port CG with the second outlet port C2 and the second inlet port SI to the first outlet port C1 to provide carrier gas to the second output port C2 and the analytical mixture SI to the first outlet port C1.

In a chop2 position of the 5/3 valve 200, valve 370 is in position I and valve 380 is in position II, by means of lever 401 and lever 402 respectively, to connect the first inlet port CG with the first outlet port C1 and the second inlet port SI to the second outlet port C2 to provide carrier gas to the first output port C1 and the analytical mixture SI to the second outlet port C2.

**Table 1**

| | | **Output** | **C1** | **C2** | **V** |
|---|---|---|---|---|---|
| | **Switch position** | | | | |
| Input 1: CG; Input 2: SI | Discard (401 II; 402 I) | | CG | CG | SI |
| | chop1 (401 I; 402 I) | | SI | CG | |
| | chop2 (401 I; 402 II) | | CG | SI | |

According to another aspect, the vent can be provided with carrier gas in chop1 position and/or in chop2 position, e.g. by means of a modified valve 370 and/or additional tubing at valve 370, for balancing the output pressure.

Figure 5 to 8 sketches a method for detecting a component of a chromatographic sample by means of a gas chromatograph, wherein a peak-modulator-valve 120 and a heart cut valve 110 is formed by a plurality of pneumatic valves 401 to 404, which are arranged at a modular valve assembly 410 comprising a pilot plate, a diaphragm, a unitary distribution plate and a sensor printed circuit board, which are not shown here. The diaphragm can be positioned between the pilot plate and the unitary distribution plate and can be configured to open or close one or more pneumatic valves 401 to 404, which can be formed between the diaphragm and the unitary distribution plate. The modular valve assembly 410 comprises ports 2-1 to 2-4 to distribute gas flows of the gas chromatograph system by means of the pneumatic valves 401 to 404, which can be actuated by actuators 422 and 424.

The configuration of the gas chromatograph system can be configured analogous to the gas chromatograph system 300 described by figure 3.

An analytical mixture can be provided at an input to a chromatographic-separation column 310 for spreading components A, B, C of the analytical mixture as indicated by hatched circles A, C and a hatched ellipse B.

The spread components A, B, C of the analytical mixture are supplied to an inter-column detector 320, which can be configured to control a heart cut valve 110. The heart cut valve 110 comprises the valve 403 and 404, which can be actuated by pneumatic actuators 424 and 422, respectively. The pneumatic actuators 424 and 422 of the inter-column detector 320 are controlled by means of a detection signal of the inter-column detector 320, when the spread components A, B, C path the inter-column detector 320 and the respective detection signal is generated by the inter-column detector 320. Therefore, the heart cut valve 110 can be configured to provide a component B of the analytical mixture to a peak-modulator-valve 120. The heart cut valve 110 is coupled directly to the peak-modulator-valve 120 upstream, particularly the heart cut valve 110 is coupled directly upstream from the peak-modulator-valve 120, in respect to the mobile phase flow as indicated by the arrows of figure 5, for selecting a specific portion B of the analytical mixture upstream of the peak-modulator-valve 120 by splitting the analytical mixture into specific portions B and C and providing the portion B by means of the valve 403 to the peak-modulator-valve 120 and to provide the portion C, which can be discarded, by means of the valve 404 to a vent V 303. The peak-modulator-valve 120 can comprise valves 402, 403, which can be actuated by the pneumatic actuators 424 and 422, respectively. The pneumatic actuators 424 and 422 of the modular valve assembly 410 can be controlled to provide the portion B of the analytical mixture or a carrier gas CG 306 alternatively to the chromatographic-detection column 350 by means of the valve 403 or 402 respectively. The chromatographic-detection column 350 is coupled downstream with the peak-modulator-valve 120. A chromatograph-detector 360 is coupled downstream to the chromatographic-detection column 350, for detection of the component of the chromatographic sample.

Figure 5 particularly, sketches schematically a step of the method, where the analytical mixture is spread by the chromatographic-detection column 310, detected by the inter-column detector 320 and wherein the portion B of the analytical mixture is entering the heart cut valve 110 at the port 2-6 of the modular valve assembly 410. The pneumatic valve 404 of the heart cut valve 110 is open to release a portion C of the analytical mixture to the vent V 303. The pneumatic valve 403 of the heart cut valve 110 is closed until the portion B of the analytical mixture can be provided to the peak-modulator-valve 120. Valve 402 of the peak-modulator-valve 120 is open to provide carrier gas to the chromatographic-detection column 350.

Figure 6 particularly, sketches schematically a step of the method, where the pneumatic valve 404 of the heart cut valve is closed and the pneumatic valve 403 of the heart cut valve 110 is open to provide a part of the portion B of the analytical mixture to the peak-modulator-valve 120, wherein the pneumatic valve 403 is also a part of the peak-modulator-valve 120. By means of the peak-modulator-valve 120, a part of the portion B of the analytical mixture is provided to the chromatographic-detection column 350. Valve 402 of the peak-modulator-valve 120 is closed and a carrier gas flow path can be provided by means of the modular valve assembly 410 to release the carrier gas to a vent V.

Figure 7 particularly, sketches schematically a step of the method, where the pneumatic valve 402 of the peak-modulator-valve 120 is open again to provide carrier gas to the chromatographic-detection column 350 alternatively to the prior provided part of the portion B of the analytical mixture. Because with this module valve assembly 410 pneumatic valve 402 of the peak-modulator-valve 120 and pneumatic valve 404 of the heart cut valve 110 are controlled in the same way by the pneumatic actuator 422 also pneumatic valve 404 is open and can release another part of the portion B of the analytical mixture.

Figure 8 particularly, sketches schematically a step of the method according to the step of the method as described by figure 6 to provide another part of the portion B of the analytical mixture to the chromatographic-detection column 350. The alternating provision of parts of the portion B of the analytical mixture or the carrier gas can form or build a chopped analytical mixture train 305 for generating a baseline signal and/or a component signal by means of the chromatographic-detector 360, when the chopped analytical mixture train 305 is passing the chromatograph-detector 360.

## Claims

1. A gas chromatograph (300, 307) for detecting a component of an analytical mixture, comprising:
a first chromatographic-detection column (350);
a peak-modulator (120, 380), which is coupled upstream from the first chromatographic-detection column (350) and configured to be provided with the analytical mixture; and
a first chromatograph-detector (360), which is coupled downstream to the first chromatographic-detection column (350), for detection of the component of the chromatographic sample.

2. The gas chromatograph (300) according to claim 1, wherein the peak-modulator (120, 380) is directly coupled to the first chromatographic-detection column (350), wherein the peak-modulator (120, 380) is upstream from the chromatographic-detection column (350) in respect to a flow of the analytical mixture.

3. The gas chromatograph (300, 307) according to claim 1 or 2, wherein the first chromatograph-detector (360) is coupled to the first chromatographic-detection column (350) downstream in respect to the flow of the analytical mixture, for detection of the component of the analytical mixture, after passing the first chromatographic-detection column (350).

4. The gas chromatograph (300, 307) according to any of the preceding claims, wherein the peak modulator (120, 380) is configured to provide the analytical mixture or a carrier gas alternately to the first chromatographic-detection column (350).

5. The gas chromatograph (300) according to any of the preceding claims, comprising:
a heart cut valve (110), which is coupled directly to the peak-modulator (120), wherein the heart cut valve is upstream from the peak-modulator in respect to the flow of the analytical mixture, for selecting a specific portion of the analytical mixture upstream of the peak-modulator-valve (120).

6. The gas chromatograph (307) according to any of claims 1 to 5, comprising:
a second chromatographic-detection column (355); wherein the second chromatographic-detection column (355) is coupled downstream to the peak-modulator (380); and
a second chromatograph-detector (365), which is coupled downstream to the second chromatographic-detection column (355), for detection of the component of the analytical mixture.

7. The gas chromatograph (307) according to claim 6, wherein the peak modulator (380) is configured to provide a peak modulated analytical mixture, comprising the analytical mixture or the carrier gas alternately, in alternate terms to the first chromatographic-detection column (350) or the second chromatographic-detection column (355), particularly crosswise in respect to the analytical mixture.

8. The gas chromatograph (300, 307) according to any one of the preceding claims, wherein the peak-modulator (120, 380) comprises a peak-modulator-valve and/or a cryogenic peak-modulator, particularly configured for generating a series of alternating plugs of carrier gas and analytical mixture.

9. The gas chromatograph according to claim 5, wherein the peak-modulator comprises a peak-modulator-valve (120); and wherein the heart cut valve (110) and a peak-modulator-valve (120) are configured and coupled to constitute a 4/2 valve (100).

10. The gas chromatograph according to claim 5 and one of claim 6 to 8, wherein the heart cut valve (370) and the peak-modulator-valve (380) are configured and coupled to constitute a 5/3 valve (200).

11. The gas chromatograph (300) according to any of claims 1 to 6 or 9, comprising:
a modular valve assembly (410), which comprises a plurality of pneumatic controlled valves (401, 402, 403, 404); and wherein the peak modulator valve (120) is built by means of a first part (402, 403) of the plurality of pneumatic controlled valves (401, 402, 403, 404).

12. The gas chromatograph (300) according to any of claims 1 to 6 or 9 or 10, wherein the heart cut valve (110) is built by means of a second part (403, 404) of the plurality of pneumatic driven valves (401, 402, 403, 404).

13. The gas chromatograph (300) according to claim 8, wherein at least one common pneumatic controlled valve (403) is included in the first part (402, 403) of the plurality of pneumatic driven valves; and the common pneumatic controlled valve (403) is included in the second part (403, 404) of the plurality of pneumatic driven valves (401, 402, 403, 404).

14. A method for detecting a component of an analytical mixture by means of a gas chromatograph (300, 307), particularly according to any of the claims 1 to 12, the method comprising:
Supplying the analytical mixture or a carrier gas alternatively to a first and/or second chromatographic-detection column (350, 355), for building a chopped chromatographic analytical mixture train;
Generating a baseline signal and/or a component signal by means of a first and/or second chromatograph-detector (360, 365), to which the chopped analytical mixture train is supplied, for detection of the component of the analytical mixture.

15. The method according to claim 14, wherein the baseline signal is generated if a portion of the chopped analytical mixture train containing the carrier gas dominates the generation of the detector signal; and/or wherein the component signal is generated if a portion of the chopped analytical mixture train containing the analytical mixture dominates the generation of the detector signal.
